# EUROPÄISCHE PATENTSCHRIFT

(11) **EP 0 590 122 B1**
(45) Veröffentlichungstag und Bekanntmachung des Hinweises auf die Patenterteilung: **10.06.1998**
(21) Anmeldenummer: 93907839.0
(22) Anmeldetag: 26.03.1993
(51) Int. Cl.: G06K 7/08

(54) **VERFAHREN ZUR ÜBERTRAGUNG SERIELLER DATENSTRUKTUREN FÜR INFORMATIONSTRÄGERIDENTIFIKATIONSSYSTEME, DANACH ARBEITENDES ÜBERTRAGUNGSSYSTEM UND INFORMATIONSTRÄGER**
PROCESS AND SYSTEM FOR TRANSMITTING SERIAL DATA STRUCTURES FOR INFORMATION CARRIER IDENTIFICATION SYSTEMS, AND INFORMATION CARRIERS
PROCEDE ET SYSTEME DE TRANSMISSION DE STRUCTURES SERIELLES DE DONNEES POUR SYSTEMES D'IDENTIFICATION DE SUPPORTS D'INFORMATION, AINSI QUE SUPPORT D'INFORMATION

(30) Priorität: 31.03.1992 DE 4210669
(43) Veröffentlichungstag der Anmeldung: 06.04.1994
(73) Patentinhaber: MICRO-SENSYS GMBH, D-99084 Erfurt (DE)
(72) Erfinder: JURISCH, Reinhard, D-5067 Erfurt (DE); PEITSCH, Peter, D-5080 Erfurt (DE); BRODERSEN, Olaf, D-5080 Erfurt (DE)
(74) Vertreter: Pfeiffer, Rolf-Gerd
(86) Internationale Anmeldenummer: EP9300748
(87) Internationale Veröffentlichungsnummer: WO9320531

(56) Entgegenhaltungen:
- EP-A- 0 055 639
- EP-A- 0 161 779
- EP-A- 0 198 642

## Beschreibung

Die Erfindung betrifft ein Verfahren zur Übertragung serieller Datenstrukturen für Informationsträgeridentifikationssysteme und ein danach arbeitendes Übertragungssystem auf kontaktloser, elektromagnetischer Übertragung beruhend und einen dafür einsetzbaren Informationsträger. Derartige Identifikationssysteme sind insbesondere durch separate Chipkarten und Werkzeugdatenträger bekannt geworden. Als Stand der Technik sei hierbei auf DE-PS 37 21 822, EP-A-0 161 779, EP 79 047 und WO 88/03594 verwiesen. Den bekannten Idenfifikationssystemen, die informationsträgerseitig integrierte Chip's einsetzen, haftet dabei der Nachteil an, daß sie auf dem Informationsträger einen stromverbrauchenden Zwischenspeicher, der einen Datenvergleich realisiert, benötigen, relativ hohe Energien zur Datenübertragung erforderlich sind, eine relativ hohe Datenunsicherheit besteht und die Zeit zur Datenübertragung und des Datenvergleichs für einige Anwendungsfälle relativ lang ist.
Der Erfindung liegt somit die Aufgabe zugrunde, ein Informationsträgeridentifikationssystem und ein Verfahren zur Übertragung serieller Datenstrukturen anzugeben, daß die Nachteile des Standes der Technik umgeht.

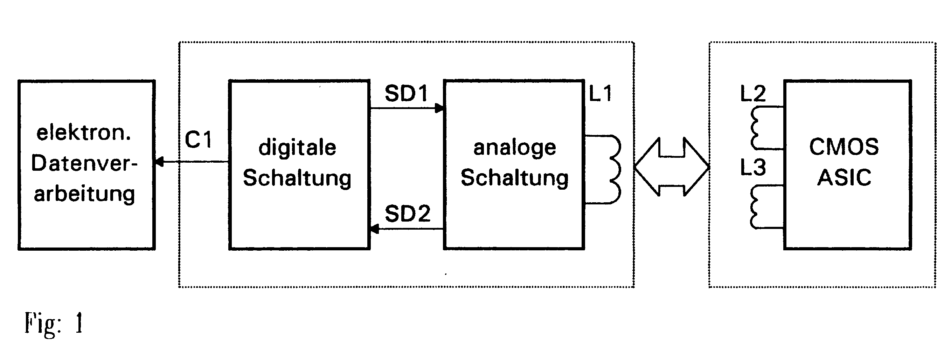

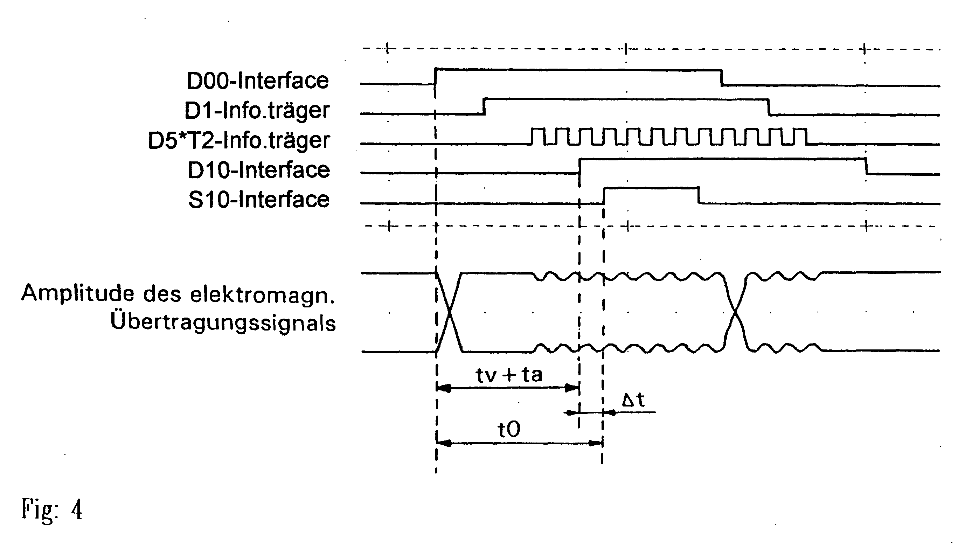

Diese Aufgabe wird durch die kennzeichnenden Merkmale der Patentansprüche gelöst.
Ein Identifikationssystem besteht gemäß der Erfindung aus einem Interfacebaustein und einem Informationsträger. Mit dem Interfacebaustein wird die Datenkommunikation zwischen beliebigen Computern und dem Informationsträger realisiert. Zur praktischen Lösung dieser Aufgabe verwendet man sinnvollerweise einen Mikrocontroler, Mikroprozessor bzw. eine frei programmierbare Logik, der bzw. die die Datenkopplung bspw. zu einem Computer herstellt und gleichzeitig notwendige Steuer- und Befehlssignale sowie speziell auf den Informationsträger zugeschnittene serielle Datenein- und -ausgänge bereitstellt (SD1 und SD2 in Fig. 1). Der Datenausgang des Mikrocontrolers bzw. ihm vergleichbarer Baugruppe führt eine serielle Datenstruktur an einen Digitalkomparator, der die ausgesendeten Daten bitweise und getaktet mit einer über einen AM-Demodulator empfangenen seriellen Datenstruktur vergleicht. Das Ergebnis des Vergleiches wird über eine Leitung I10 an den Mikrocontroler o.ä. gegeben und in diesem ausgewertet. Taktimpulse für einen getakteten Vergleich werden über eine Steuerleitung S10 (entsprechend Fig. 4) geliefert. Der Datenvergleich kann flankengesteuert durch Setzen eines Flip-Flop's oder statisch erfolgen. Die Taktflanke für S10 darf frühestens nach einer Zeit tᵥ+tₐ (tᵥ = Signalverzögerungszeit, tₐ= Signalanstiegszeit) gesetzt werden. Ebenso kann die Funktion des Digitalkomparators interfaceseitig und/oder auf der Informationsträgerseite realisiert werden (im folgenden wird jedoch nur die interfaceseitige Anbringung weiter ausgeführt). In einem FSK/PSK-Modulator werden die Datenlevel High und Low in zwei Frequenzlagen bzw. Phasenlagen gewandelt. Ein auf diese Weise modulierter Träger T10 treibt über eine Leistungsstufe einen Schwingkreis. Über die magnetische Kopplung einer Spule L1 des Schwingkreises induziert die Trägerfrequenz T10 in den Informationsträger vorzugsweise über L2 eine der Trägerfrequenz folgende Wechselspannung. Ein Eingangskreis L2 am Informationsträger kann mit einer integrierten Kapazität C2 auf Resonanz abgestimmt sein. Es liegt selbstverständlich im Rahmen der Erfindung, statt eines kompletten Schwingkreises primär- und sekundärseitig ohne Resonanzübertragung zu arbeiten, d.h. daß bspw. für C2 nur parasitäre Kapazitäten wirken. Eine Gleichrichtung erzeugt aus der HF-Spannung eine interne Betriebsspannung. Über einen Schwingkreis L2 des Informationsträgers wird die Trägerfrequenz abgegriffen und in einem Komparator digitalisiert. Die Gewinnung der Takt- und Datensignale erfolgt nach konventionellen integrationsfreundlichen Methoden in Abhängigkeit von der gewählten Modulationsart des Interface in einem Demodulator des Informationsträgers. Gemäß der Erfindung wird ein serielles Datensignal D1 nicht nur einer Steuerlogik zugeführt, sondern insbesondere über einen elektronischen Schalter an einen Amplitudenmodulator durchgeschaltet. Der Amplitudenmodulator dämpft eine Spule L3 des Informationsträgers im Takt eines Hilfsträgers T2, der wiederum im Rhythmus eines empfangenen Datensignals D4 aus- bzw. aufgetaktet wird. Durch die induktive Kopplung zur Spule L1 kann nach einer selektiven Verstärkung auf der Frequenz eines Hilfsträgers und einer einfachen Amplitudendemodulation das vom Informationsträger rückgesandte Signal mittels des Digitalkomparators verglichen werden.

Die Datenübertragung zwischen dem Interface und dem Informationsträger beginnt mit dem Erzeugen einer Betriebsspannung durch die vom Trägersignal in L2 induzierten Spannung. Durch eine Auswerteschaltung werden die gleichgerichtete Spannung über einer Glattungskapazität C3 und wahlweise die Betriebsspannung bewertet und einer weiteren Verwendung zugeführt. Ein vorgebbares Spannungsniveau der Spannung über C3 dient der Steuerung der Sendeenergie des Interface. Die Information wird über eine Busleitung S1 an die Steuerlogik des Informationsträgers gegeben, ein Statussignal D2 wird über einen Digitalmultiplexer und AM-Modulator an das Interface gegeben. Dieses führt nach Auswertung im Mikrocontroler o.ä. eine Steuerung der Leistungstreiberstufe über S20 so durch, daß eine Spannungsübersteuerung an L2 im Informationsträger vermieden wird. Nach Setzen aller logischen Funktionen durch die Auswerteschaltung des Informationsträgers geht der Informationsträger selbst in eine Stand-by-Phase. Der weitere Programmablauf ist durch einen Programmzähler und eine Steuerlogik vorgebbar, die über Setz- und Steuerleitungen S2 und S3 verbunden sind. Vorzugsweise kann in der Stand-by-Phase eine serielle Dateninformation D2 einmalig oder wiederholend, oder insbesondere bei Codeträgern eine serielle Dateninformation D2 (Statussignal) und anschließend automatisch gesteuert durch die Steuerlogik eine fest codierte Information von D4 über den Digitalmultiplexer an den AM-Modulator gegeben werden. Die Dateninformation D2 wird im Interface für einen weiteren Programmablauf ausgewertet. Mit Herstellung der Empfangsbereitschaft wird der Programmzähler bei Datenträgern wieder in die Startposition gesetzt und erst nach dem Anliegen eines Datenwortes D1 über S2 gestartet. Damit ist eine Synchronisation für den seriellen Datenfluß zum Informationsträger gegeben. Die empfangenen Daten, die aus Steuer-, Adreß- und Datenworten bestehen, werden in der Steuerlogik decodiert. Insbesondere werden aus dem Steuerwort die Programmbefehle gelesen und in einem statischen Speicher abgelegt. Entsprechend dem Programmbefehl z.B. Lesen, Schreiben oder Löschen laufen die allgemein bekannten Kommunikationen mit einem nichtflüchtigen Speicher, z.B. einem 2Kbit E²PROM, über die Leitungen D3, S4 und D4 ab. Beim Lesen der Daten D4 aus dem nichtflüchtigen Speicher schaltet der Digitalmultiplexer definiert gesteuert an einen AM-Modulator durch. Eine Zwischenspeicherung zum Datenvergleich bei mehrmaligem Senden identischer Daten ist, wie nach dem Stand der Technik notwendig, nicht erforderlich. Falls der geschilderte on-line Datenvergleich negativ ausgeht, wird über das Austasten des Trägers die Spannung über C3 unter einen ebenfalls vorgebbaren Wert vermindert, die Auswerteschaltung setzt über S1 die Logik zurück, und der Funktionsablauf kann wieder mit der Startphase beginnen, falls der Träger wieder zugeschaltet wird. Alternativ ist es ebenso möglich, bei positiv ausgehenden on-line Datenvergleich dem Informationsträger ein Bestätigungsbit zu übersenden, woran sich weitere Datenübertragungen anschließen können, bzw. im Fall des negativen Datenvergleichs bspw. kein Bestätigungsbit bzw. eine andere Datenfolge zu übertragen, so daß der Vorgang der Übertragung so lange wiederholt wird, bis ein positiver Datenvergleich erfolgt.

Die Vorteile der Erfindung bestehen darin, daß durch eine zeitparallele Datenübertragung von gesendeten und wieder empfangenen Daten auf informationsträgerseitige, Strom verbrauchende Zwischenspeicher verzichtet werden kann, wodurch sich eine wesentliche Vereinfachung im Schaltungsaufbau des Informationsträgers ergibt, weniger Energie zur Datenübertragung benötigt wird, die Zeit zur Datenübertragung gemessen am Stand der Technik verkürzt wird und gleichzeitig eine hohe Datensicherheit erreicht wird. Ein weiterer Vorteil des erfindungsgemäßen Gesamtsystems besteht darin, daß ein und dasselbe Übertragungssystem sowohl für Datenträger als auch für bloße Codeträger Verwendung finden kann.

Die Erfindung soll, insbesondere in ihrer Funktionsweise anhand schematischer Zeichnungen eines Ausführungsbeispiels näher erläutert werden. Es zeigen:
- Fig. 1: blockschaltartig die wesentlichen Bestandteile erfindungsgemäßen Übertragungssystems,
- Fig. 2: eine detailliertere Darstellung der wesentlichen interfaceseitigen Baugruppen und ihr Zusammenwirken,
- Fig. 3: eine Darstellung der wesentlichen informationsträgerseitigen Baugruppen und ihr Zusammenwirken und
- Fig. 4: ein Beispiel für interface- und informationsträgerseitige Datenstrukturen in ihren Beziehungen zueinander.

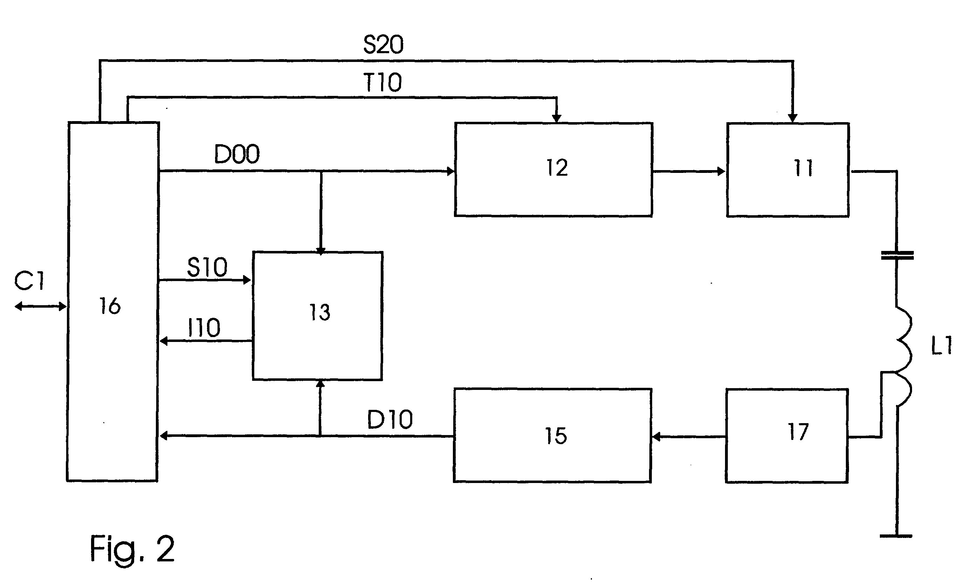

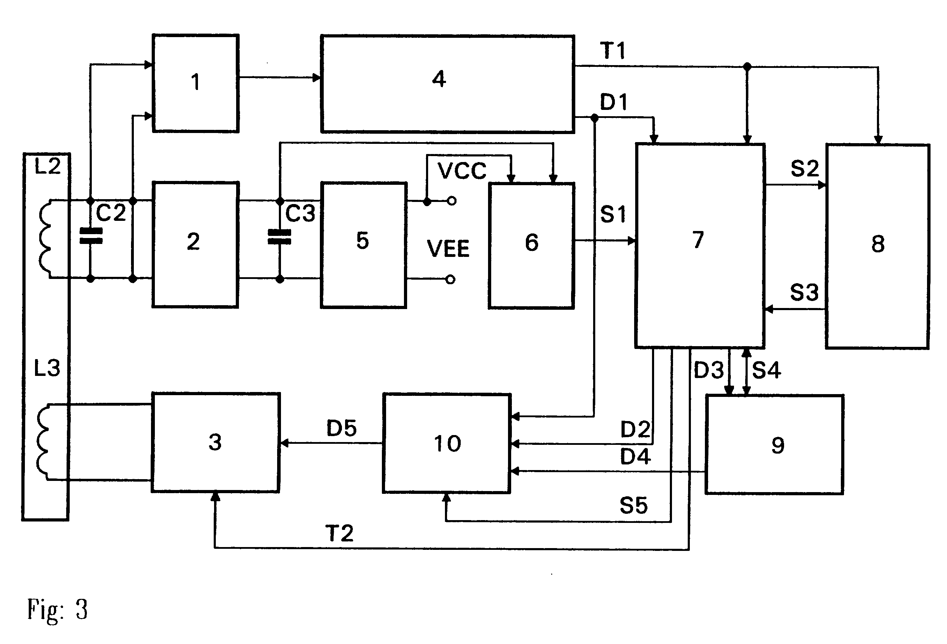

Fig. 1 zeigt eine Ankopplung einer allgemeinen Datenverarbeitungsanlage über eine Verbindung C1 an ein aus digitalen und analogen Baugruppen bestehenden Interface mit einer elektromagnetischen Kopplung über L1 an L2 und L3 an einen Informationsträger, der vorzugsweise durch CMOS-ASIC realisiert ist. Fig. 2 stellt den in Fig. 1 schwach umrissenen eigentlichen Interfaceteil detaillierter dar. Dieser besteht im wesentlichen aus einem Mikroprozessor oder einem Mikrocontroler bzw. einer frei programmierbaren Logik 16, einem Digitalkomparator 13, einem PSK-Modulator 12, einem Demodulator 15, einem Leistungstreiber 11 und einem selektiven Verstärker 17. In gleicher Weise sind in Fig. 3 die wesentlichen Baugruppen eines Informationsträgers bestehend aus einem Komparator 1, einem Gleichrichter 2, einem Amplitudenmodulator 3, einem PSK/FSK-Demodulator 4, einem Spannungsstabilisator 5, einer Power-On-Reset-Schaltung 6, einer Steuerlogik 7, einem Programmzähler 8, einem nichtflüchtigen Speicher 9 und einem integrierten elektronischen Schalter (Multiplexer) 10, sowie seiner Empfangs- und Sendeinduktivitäten L2 und L3 dargestellt. Darüber hinaus sind sämtliche wesentlichen Datenleitungs- und Schaltwege jeweils an den betreffenden Verbindungspfaden bezeichnet.
Im folgenden soll der gesamte, mit der Erfindung realisierbare Systemablauf beschrieben werden.

1. Der Start des Systemablaufes beginnt mit einem interfaceseitigen Absenden eines hochfrequenten Trägersignals mit einem Tastverhältnis 1:1 über die als Antenne wirkende Induktivität L1. Dazu wird ein Leistungstreiber 11 über einen PSK-Modulator 12 im Interface mit einem digitalen Signal D00 angesteuert. Das Signal D00 entspricht dem logischen Zustand L eines seriellen Datensignals. Eine Steuerleitung S20 setzt den Leistungstreiber auf maximale Sendeleistung oder beginnt langsam, in einem vorgebbaren Zeitablauf (ca. 1ms), die Sendeleistung auf ein Maximum zu steuern. Ein Takt T10 liefert dem Modulator 12 eine zum Datensignal synchrone Trägerfrequenz. Über S10 wird ein Digitalkomparator 13 deaktiviert, d.h. I10 liefert unabhängig vom logischen Zustand D00 zu D10 immer einen positiven Datenvergleich des Digitalkomparators (vgl. Fig. 2).

2. Mit Absenden des Trägersignals baut sich, falls im Sendebereich von L1 vorhanden, in einem Informationsträger (Daten- oder Code-Träger) durch transformatorische Kopplung mittels L2 und anschließender Gleichrichtung 2 eine Betriebsspannung über einem Glättungskondensator C3 auf. Hat diese Spannung einen ausreichenden Wert erreicht, die mittels eines Spannungsstabilisators 5 eine oder mehrere stabilisierte Gleichspannungen VCC erzeugen läßt und eine gewisse Energiereserve für den Start weiterer Schaltungen des Informationsträgers bereit hält, gibt eine Power-On-Reset-Schaltung 6 ein statisches Startsignal S1 an eine Steuerlogik 7. Bis dahin gesetzte Funktionen werden zum Start freigegeben. Insbesondere wird ein erfindungswesentlicher Digitalmultiplexer 10 von der Steuerlogik 7 über S5 so gesteuert, daß er einen Kanal für D2 durchschaltet. Dieses Signal ist ein serielles Kennwort (z.B. 8 bit), das zyklisch nacheinander durch die Steuerlogik 7 gesteuert und vorprogrammiert über eine Leitung D5 zu einem Modulator 3 und an L3 (Rücksendeantenne) weitergegeben wird. Im Modulator 3 erfolgt eine Dämpfungsmodulation über L3 durch Austastung (100% Amplitudenmodulation) oder Phasenumtastung eines Hilfsträgers T2. L3 sendet die Information zum Interface.

3. Im Interface wird durch selektive Auskopplung und Gleichrichtung 17 ein Hilfsträger gewonnen, der die Information als Phasen- oder Amplitudenmodulation enthält, die vom Informationsträger zurückgesandt wird. Ein Demodulator 15 liefert das entsprechende digitalisierte serielle Kennwort.

4. Wird im Interface keine bekannte Datenstruktur empfangen, bedeutet dies, daß kein Informationsträger im Empfangsbereich ist. Der Energieträger kann, um Energie zu sparen, abgeschaltet werden und nach definierbarer Zeit wie unter 1. zugeschaltet werden.

5. Falls das Interface ein bekanntes Kennwort analysiert, beginnt ein beliebig programmierbarer Ablauf entsprechend des Kennwortinhaltes. So kann z.B. das Kennwort eine Struktur enthalten, die darauf hinweist, daß ein Codeträger im Empfangsbereich ist. Die Ablaufsteuerung im Interface würde dann den Digitalkomparator 13 nicht aktivieren und weitere serielle Datenstrukturen einlesen. Bei bekannter Datenlänge (z.B. auch im Kennwort verschlüsselt) kann der Träger dann abgeschaltet werden. Zur Überprüfung des Informationsinhaltes kann der Vorgang beliebig oft wiederholt werden. Das Kennwort kann z.B. auch digital codiert die Höhe der Betriebsspannung im Informationsträger enthalten. Ist eine ausreichende Spannung vorhanden, kann das Interface die Sendeleistung über S20 zurücknehmen.

6. Wird das Kennwort eines Datenträgers detektiert, beginnt eine serielle Datenübertragung vom Interface zum Informationsträger mit einem Startbit. Gleichzeitig wird der Digitalkomparator 13 aktiviert und ein bitbezogener Datenvergleich durchgeführt. Voraussetzung für einen bit-bezogenen Datenvergleich ist, daß die in der Übertragungskette vorhandenen Signalverzögerungen, Ein- und Ausschaltzeiten in der Summe kleiner als eine Bitlänge sind (vgl. Fig. 4). Der Datenvergleich kann flankengesteuert durch einen Flip-Flop oder statisch erfolgen. Die Taktflanke für S10 zum Datenvergleich darf frühestens nach einer Zeit t₀=tᵥ+tₐ+Δt erfolgen. Die Taktimpulse werden über die Steuerleitung S10 bereitgestellt. Fällt der Bitvergleich negativ aus, gibt der Digitalkomparator 13 über I1 ein Informationssignal an den Mikroprozessor oder Mikrocontroler oder an eine freiprogrammierbare Logik 16. Diese schaltet sofort das Trägersignal durch Setzen von S20 oder Abschalten des Taktes T10 (Trägerfrequenz) ab. Da nun keine Energie mehr an den Informationsträger übertragen wird, bricht die Betriebsspannung über C3 sehr schnell zusammen und sinkt auf eine vorgegebene Ausschaltspannung der Power-On-Reset-Schaltung 6. Die gestarteten Programmabläufe im Informationsträger werden definiert zurückgesetzt. Der Informationsträger muß nun, wie unter 2. geschildert, neu gestartet werden.

7. Im Informationsträger löst das Startbit den Start zum seriellen Datenempfang aus. Das bedeutet eine Synchronisation der Steuerlogik 7 und eines Programmzählers 8 sowie ein Umschalten eines digitalen Multiplexers 10 auf Kanal D1. Damit wird das empfangene Signal zum Modulator 3 des Informationsträgers geleitet und an das Interface zurückgesandt.

8.Der nach dem Startbit vom Interface abgesandte serielle Datensatz enthält ein Steuerwort, eine Datenadresse und ggf. ein Datenwort. Sinnvollerweise sendet man zuerst das Steuerwort, da mit diesem die Programmablaufsteuerung in der Steuerlogik 7 des Informationsträgers programmiert werden kann.

9. Der Programmablauf im Informationsträger findet entsprechend des Steuerworts und der implementierten Programme statt. Die Programme sind in der Steuerlogik 7 fest "verdrahtet" und steuern den Programmzähler 8, den Digitalmultiplexer 10 und einen Speicher 9 während der gesamten Datenübertragung vom Interface zum Informationsträger. Im Fall z.B. des Datenlesens erfolgt gesteuert durch die Steuerlogik 7 und des Programmzählers 8 eine synchrone Umschaltung des Multiplexers 10 auf Kanal D4, wodurch der serielle Datenfluß aus dem Speicher 9 zum Modulator 3 geschaltet wird. Die Umschaltung des Multiplexers 10 von D1 auf D4 kann determiniert durch den Programmzähler 8 und die Steuerlogik 7 oder gesteuert in Abhängigkeit vom Inhalt des Steuerwortes im Datensatz erfolgen. Es kann z.B. die Position D4 beim Programmieren des Speichers 9 übersprungen und ein spezielles Kennwort für den Arbeitszustand Programmieren des Speichers durchgeschaltet werden. Am Ende des seriellen Datensatzes schaltet der Multiplexer 10 wieder auf Kanal D1. Es erfolgt wieder ein kontinuierliches Senden des Kennworts, welches auch änderbare Statussignale beiinhalten kann. Im Kennwort können gesendet werden: eine Informationsträger-Kennung, ein kundenspezifischer Code, eine digitalisierte Betriebsspannung im Informationsträger, der Arbeitszustand des Speichers (z.B. bei E²PROM im Schreibmodus: Write in progress).

Die erfindungsgemäß vorgenommene zeitparallele Datenübertragung in beide Richtungen, erfordert eine besondere Methode die modulierten Datensignale im Energieträger von rückgesendeten Daten des Informationsträgers zu trennen. Dazu wird erfindungsgemäß ein weiterer Träger (Hilfsträger) eingesetzt, der durch selektive Mittel im Interface vom Energieträger bei einem bestimmten Mindestabstand beider Frequenzen sowie unterschiedliche Modulationsarten getrennt werden kann. Beispielsweise kann die zurückgesandte Information mit einem AM-Demodulator, der den Hilfsträger im Interface zurückgewinnt und selektiv verstärkt sowie einen Phasendemodulator, der die Phasenlage des Hilfsträgers entsprechend der Dateninformation beinhaltet, wesentlich empfindlicher empfangen werden.

Ebenso bietet eine erfindungsgemäße 3-Spulenanordnung für die Umsetzung der gestellten Forderungen entscheidende Vorteile. Die Einführung einer dritten Spule, die der bisher bekannte Stand der Technik nicht aufzeigt, bedingt eine galvanische Trennung der Eingangsschaltung und Sende schaltung im Informationsträger und führt zu einem komplexen 3-Spulensystem mit loser Kopplung zwischen L1, L2 und L3 untereinander. Damit können insbesondere vorgebbare Spannungs- und Dämpfungsverhältnisse an den drei Spulen durch geometrisch bedingte Koppelfaktoren realisiert werden. Es sind geometrische Anordnungen möglich, die z.B. eine geringere Dämpfung der an L2 empfangenen Energie sowie eine effektivere Modulation des zurückgesandten Signals in L1 bewirken. So soll insbesondere die Dämpfung der durch die Spule L1 induzierten Spannung über der Empfangsspule L2 des Informationsträgers unter 20% bleiben. Das ist z.B. erreichbar, in dem L2 und L3 als planare Spulen ausgeführt sind und L3 im Inneren von L2 angeordnet ist, wobei die Spulenachsen von L2 und L3 im wesentlichen koaxial angeordnet sind und ihre Spulenachsen im wesentlichen achsparallel zur Spulenachse von L1 verlaufen. Dabei ist als ein Grenzfall eine Dimensionierung K12 · K23 << K13 (mit K12 = Koppelfaktor zwischen L1 und L2 usw.) möglich.

## Patentansprüche

1. Verfahren zur Übertragung serieller Datenstrukturen für Informationsträgeridentifikationssysteme auf induktiver Basis, in dem in einer Sendeeinheit ein Sendeschwingkreis mit frequenz- bzw. phasenmodulierten Datenstrukturen beaufschlagt wird die ausgesandten elektromagnetischen Schwingungen von einem Informationsträger empfangen werden, nach erfolgter Frequenz- bzw. Phasendemodulation die Datenstrukturen im Informationsträger decodiert, gelesen oder gespeichert werden dadurch gekennzeichnet, daß diese Datenstrukturen ihrerseits zugleich während des Empfangs amplitudenmoduliert zeitparallel der Sendeeinheit zurückgesandt werden, wo nach erfolgter Amplitudendemodulation unmittelbar ein bitweiser Kontrollvergleich mit der ausgesandten Datenstruktur vorgenommen wird und dieser Vorgang bei negativem Datenvergleich sofort oder am Ende eines Datenwortes oder Datensatzes abgebrochen wird und im weiteren so oft wiederholt wird, bis ausgesandte und wieder empfangene Datenstrukturen identisch sind.

2. Verfahren nach Anspruch 1, dadurch gekennzeichnet, daß bei negativem Datenvergleich sofort oder am Ende eines Datenwortes durch Abschalten des Energieträgers und Abfall der Betriebsspannung auf dem Informationsträger die Datenübertragung abgebrochen wird und bei neuem Einschalten des Energieträgers auf dem Informationsträger ein Reset ausgelöst wird.

3. Verfahren nach Anspruch 1, dadurch gekennzeichnet, daß bei negativem Datenvergleich der Informationsträger über seine Steuerlogik vermittels eines ihm übersandten Kontrollbits zurückgesetzt wird und dieser Vorgang so oft wiederholt wird, bis ausgesandte und wieder empfangene Datenstrukturen identisch sind.

4. Verfahren nach Anspruch 1 und 2 oder 3, dadurch gekennzeichnet, daß, die von einer Quelle einer Mikrocontroler-Logik-Einheit o.ä. zugeleiteten Datenstrukturen einer Frequenz- bzw. Phasenmodulation unterworfen und leistungsverstärkt einem Sendeschwingkreis zugeführt werden, die dort ausgesandten elektromagnetischen Schwingungen von einem Schwingkreis eines integrierten Informationsträgers empfangen werden, in dem durch HF-Gleichrichtung in bekannter Weise dessen Betriebsspannung erzeugt wird, die Trägerfrequenz in einem Komparator abgegriffen und digitalisiert wird und eine Takt-, Synchronisations- und Frequenzbzw. Phasendemodulation in einer entsprechenden nachfolgenden Einheit durchgeführt wird und die danach gewonnen Signale einer Steuerlogik und zugleich über einen integrierten Schalter, der in Abhängigkeit von der bit- bzw. Byte-Breite der übertragenen Datenstrukturen in einem vorgebbaren Sende- und Empfangstakt geschaltet wird, diese Signale an einen Amplitudenmodulator durchgeschaltet werden, der eine Spule dämpft, die von der Spule ausgehende elektromagnetische Schwingung dem Sendeschwingkreis zugeführt und nach selektiver Verstärkung die empfangenen Signale einem Amplitudendemodulator zugeführt werden, wonach in einem Komparator ein unmittelbarer Datenvergleich zwischen gesendeten und empfangenen Datenstrukturen durchgeführt wird und im Falle der Nichtübereinstimmung der Informationsträger zurückgesetzt wird und ggf. unmittelbar folgend dieselbe Datenstruktur erneut bis zur festzustellenden Übereinstimmung ausgesendet wird, worauf sich anschließend weitere Datenstrukturen übertragen werden können.

5. Verfahren nach einem der vorstehenden Ansprüche, dadurch gekennzeichnet, daß zur Dämpfung des elektromagnetischen Feldes ein Hilfsträger (T2) für das amplitudenmodulierte Rücksenden von seriellen Datenstrukturen benutzt wird, der eine Selektion der an der Sendespule (L1) liegenden modulierten Information der Informationsträgersendespule L3 vom modulierten Energieträger der Leistungsstufe (11) ermöglicht.

6. Übertragungssystem zur Übertragung serieller Datenstrukturen für Informationsträgeridentifikationssysteme auf elektromagnetischer Basis, eine Interface-Baugruppe (11; 12; 15; 16; 17) zur Aufnahme, Verarbeitung und Weiterleitung von Daten einer Quelle, einen integrierten Informationsträger (1; 2; 3; 4; 5; 6; 7; 8; 9) mit Phasen- bzw. Frequenzdemodulator (4) und Schwingkreise zur Informationsübertragung enthaltend, wobei im Interface ein Frequenz- bzw. Phasenmodulator (12) vorgesehen ist, der eine Modulation von Quellendaten vornimmt, dadurch gekennzeichnet, daß diesem ein Leistungstreiber (11) nachgeordnet ist, der mit einem Schwingkreis in Verbindung steht, welcher seinerseits über einen selektiven Verstärker (17) mit einem Demodulator (15) verbunden ist und über einen Digitalkomparator (13) eine Verbindung zu einem Mikroprozessor oder einem Mikrocontroler oder einer freiprogrammierbaren Logik (16) hergestellt ist, über eine elektromagnetische Kopplung genannter Schwingkreis (L1) mit einem Schwingkreis (L2, L3) eines Informationsträgers gekoppelt ist, wobei dieser neben an sich bekannten Einzelelementen, wie Eingangsgleichrichter (2), Takt- und Synchronisationsmodulator einen Frequenz- bzw. Phasendemodulator (4) und einen Amplitudenmodulator (3) enthält, die miteinander in einem vorgebbaren Taktverhältnis über einen elektronischen Schalter (10) direkt bzw. wechselweise über eine Steuerlogik (7) in Verbindung gebracht sind, die ihrerseits darüber hinaus mit einem Programmzähler (8) und einem Speicher (9) in Verbindung steht, und daß der Ausgang des Frequenz- bzw. Phasendemodulators (4) zur gleichzeitigen Rückübertragung empfangener Daten mit dem Eingang des Amplitudenmodulators (3) verbindbar ist, und daß der Digitalkomparator (13) der Interface-Baugruppe für den bitweisen Datenvergleich gerade gesendeter Bits mit den vom Informationsträger zeitgleich zurückgesendeten Bits vorgesehen ist.

7. Informationsträger für ein Identifikationssystem auf induktiver Basis, einen Empfangsschwingkreis, der eine Spule (L2) beinhaltet, einen Komparator (1) einen Phasen- bzw. Frequenzdemodulator (4), Mittel zur Spannungsgleichrichtung (2) und -stabilisierung (5), eine Steuerlogik (7) und einen Programmzähler (8) enthaltend, dadurch gekennzeichnet, daß ein Digitalmultiplexer (10) vorgesehen ist, der mit dem Demodulator (4), dessen Ausgang zur gleichzeitigen Rückübertragung empfangener Daten mit dem Eingang eines Amplitudendemodulators (3) verbindbar ist, der Steuerlogik (7) und einem nichtflüchtigen Speicher (9) in Verbindung gebracht ist und vom Amplitudenmodulator (3) aus eine Sendespule (L3) das Feld einer Sendespule (L1) eines Interface modulieren läßt.

8. Informationsträger nach Anspruch 7, dadurch gekennzeichnet, daß die Sendespule (L3) des Informationsträgers so dimensioniert ist, daß die durch die Sendespule (L1) induzierte Spannung über der Sendespule (L3) so klein bleibt, daß sie von einem integrierten Schalter bedämpft werden kann und die dadurch hervorgerufene Dämpfung der durch die Spule (L1) induzierten Spannung über der Empfangsspule (L2) des Informationsträgers kleiner als 20% bleibt.

9. Informationsträger nach Anspruch 8., dadurch gekennzeichnet, daß die Spulen (L2, L3) im wesentlichen koaxial in einer Ebene angeordnet sind und die Spulenachsen im wesentlichen achsparallel zur Spulenachse der Sendespule (L1) verlaufend festgelegt sind.

## Claims

1. Method for inductively transmitting serial data structures in information carrier identification systems, which comprises providing a transmitter resonator circuit of a transmitter unit with frequency and phase, respectively, modulated data structures, detecting the transmitted electromagnetic waves by an information carrier, decoding, reading or storing the data structures on the information carrier after frequency and phase modulation, respectively, characterised in that during detection said data structures are fed-back amplitude modulated and time-parallel to the transmitter unit, where, after performing an amplitude demodulation, a direct bitwise comparison check with the transmitted data structure is carried out, and this operation at a negative result of the data comparison is immediately or at the end of a data word or a set of data stopped, and subsequently repeated until transmitted and detected data structures are identical.

2. Method as claimed in claim 1, wherein at a negative result of the comparison of the data, the data transfer is stopped by switching OFF the energy carrier and drop of the voltage supply on the information carrier, and, when switching ON the energy carrier again, a reset is triggered on the information carrier.

3. Method as claimed in claim 1, wherein at a negative result of the data comparison the information carrier is reset via its control logic by means of a control bit transmitted to it, and said operation is repeated until the transmitted and the detected data structures are identical.

4. Method as claimed in claim 1 and 2 or 3, wherein the data structures fed-in by a source to a microcontroller-logic unit or the like, are subject to a frequency modulation and phase modulation, respectively, and, power amplified, are fed into a sender resonant circuit, the electromagnetic waves, emitted from there, are detected by a resonant circuit of an integrated information carrier, the operation voltage of which is produced in known manner by high-frequency rectifying, the carrier frequency is recovered in a comparator and digitized, and a pulse modulation, synchronisation modulation, and frequency modulation and phase modulation, respectively, are performed in a respective subsequent unit, and the subsequently derived signals are passed to a control logic and, simultaneously, via an integrated circuit, which is switched, depending on the bit length and byte length, respectively, of the transmitted data structures within a presettable sender and detector pulse, said signals are passed to an amplitude modulator which attenuates a coil, the electromagnetic waves emitted by the coil are fed into the sender resonant circuit and, after a selective amplification, the detected signals are fed into an amplitude modulator, then, in a comparator, a direct data comparison is carried out between transmitted and detected data structures and, in the event of nonconformity, the information carrier is reset, and if required, the same data structure is immediately repeatedly transmitted until conformity is obtained, then further data structures can be transmitted.

5. Method as claimed in any of the preceding claims, wherein for attenuating the electromagnetic field a subcarrier (T2) is employed for the amplitude modulated feed-back of serial data structures, said subcarrier permits a selection of the modulated information across the sender coil (L1) of the information carrier sender coil L3 from the modulated energy carrier of the power stage (11).

6. A transmission system for electromagnetically transmitting serial data structures for information carrier identification systems, comprising an interface unit (11; 12; 15; 16; 17) for detecting, processing, and passing on of data from a source, an integrated information carrier (1, 2, 3, 4, 5, 6, 7, 8, 9) including a phase demodulator and a frequency demodulator, respectively, (4), and resonant circuits for information transfer, said interface unit including, for performing a modulation of source data, a frequency modulator and a phase modulator (12), respectively, characterised in that the latter is followed by a power driver stage (11) which is connected to a resonant circuit which, in turn, is connected via a selective amplifier (17) to a demodulator (15) and, via a digital comparator (13) a connection is established to a microprocessor or a microcontroller or a programmable logic (16), said resonant circuit (L1) is electromagnetically coupled to a resonant circuit (L2, L3) of an information carrier which, apart from individual components, known per se, such as an input rectifier (2), a pulse and synchronising modulator, includes a frequency demodulator and a phase demodulator (4), respectively, and an amplitude modulator (3), which are interconnected with one another in a presettable clock-pulse ratio via an electronic switch (10) directly and alternatingly, respectively, via a control logic (7) which, in turn, is additionally connected to a program counter (8) and a memory (9), and in that the output of the frequency demodulator and the phase demodulator (4) is connectable to the input of the amplitude modulator (3) for simultaneous feed-back of detected data, and in that the digital comparator (13) of the interface unit is provided for the bitwise data comparison of just transmitted bits to the bits simultaneously fed-back from the information carrier.

7. Inductively operating information carrier for identification systems comprising a detecting resonant circuit including a coil (L2), a comparator (1), a phase demodulator and a frequency demodulator (4), respectively, means for voltage rectification (2) and for voltage regulation (5), a control logic and a program counter (8), characterised in that a digital multiplexer (10) is provided, which is connected to the demodulator (4), the output of which is connected to the input of an amplitude demodulator (?)(3) in order to simultaneously feed-back the detected data, the control logic (7), and a non-volatile memory (9), and via the amplitude modulator (3) a sender coil (L3) is adapted to modulate the field of a sender coil (L1) of an interface.

8. Information carrier as claimed in claim 7, wherein the sender coil (L3) of the information carrier is such dimensioned that the voltage induced by the sender coil (L1) is so low across the sender coil (L3) that it can be attenuated by an integrated switch, and the such generated attenuation of the voltage induced by the coil (L1) is lower than 20% across the detector coil (L2) of the information carrier.

9. Information carrier as claimed in claim 8, wherein the coils (L2, L3) are substantially coaxially arranged in a plane and wherein the coil axes are substantially axially parallel to the coil axis of the sender coil (L1).

## Revendications

1. Le procédé destiné à la transmission de structures sérielles de données aux systèmes d'identification de supports d'information sur base inductive, qui prévoit que dans un module d'émission sur un circuit oscillant émetteur des structures sérielles de données à modulation de fréquence ou de phase soient installées, que les oscillations électromagnétiques envoyées soient reçues par un support d'information, que, après la démodulation de fréquence ou de phase les structures sérielles de données sur le support d'information phase soient décodées, lues et mémorisées, est caractérisé en ce que les structures sérielles des données, de leur côté, après modulation d'amplitude, sont renvoyées et modulées en amplitude simultanément et parallèlement à leur réception par l'unité d'émission où elles sont toute de suite comparées, bit par bit, avec les structures sérielles de données envoyées après la démodulation d'amplitude et où, en présence d'un résultat de comparaison négatif, l'envoi est arrêté, immédiatement où à la fin d'un mot ou d'un ensemble des données, et répété ensuite jusqu'à ce que les structures sérielles envoyées et reçues soient identiques.

2. Le procédé selon la revendication 1 est caractérisé en ce que dans le cas d'un résultat négatif de la comparaison des données l'échange de données est interrompu, immédiatement ou à la fin d'un mot de données, suite à la coupure de l'alimentation et à la chute de la tension de service au niveau du support d'information et qu'au moment d'une nouvelle mise en service de l'alimentation au niveau du support d'information le Reset est déclenché.

3. Le procédé selon la revendication 1 est caractérisé en ce que dans le cas d'un résultat négatif de la comparaison des données, le support d'information est remis à zéro moyennant un bit de contrôle par la logique de commande et que cette opération est répétée jusqu'à ce que les structures sérielles envoyées et retournées soient identiques.

4. Le procédé selon la revendication 1 et 2 ou 3 est caractérisé en ce que les structures sérielles de données envoyées par une source composée d'un microcontrôleur ou d'une logique ou d'une unité similaire, subissent une modulation de fréquence ou de phase pour être amenées avec une puissance amplifiée, à un circuit oscillateur émetteur; que les oscillations électromagnétiques émises sont captées par un circuit d'oscillation établi sur un support d'information intégré, où, de manière usuelle, la tension de service est générée par l'intermédiaire d'un redresseur H.F., que la fréquence porteuse est mesurée au comparateur et digitalisée et une démodulation d'impulsion, de synchronisation, de fréquence ou de phase est réalisée dans une autre unité en aval et que les signaux ainsi obtenus sont délivrés à une logique de commande et commutés par l'intermédiaire d'une bascule intégrée, vers un modulateur d'amplitude qui est de la largeur des bits ou octets des structures sérielles de données transmises dans une cadence d'émission et de réception programmable, que les signaux sont commutés à un modulateur d'amplitude qui atténue une bobine, que l'oscillation électromagnétique générée par la bobine est envoyée au circuit d'oscillation émetteur, que, après une amplification sélective, les signaux reçus sont délivrés à un démodulateur d'amplitude et qu'ensuite une comparaison directe des structures sérielles de données envoyées et reçues est réalisée au niveau du comparateur, que dans le cas où il n'y a pas concordance, le support d'information est remis à zéro et, le cas échéant, l'opération sera répétée immédiatement après, avec la même structure de données, jusqu'à ce qu'il y ait concordance et que la transmission d'autres structures sérielles de données puisse suivre.

5. Le procédé selon la une revendications susmentionnées, est caractérisé en ce qu'un support auxiliaire (T2) est utilisé pour atténuer le champ électromagnétique pour le renvoi, avec modulation d'amplitude, des structures sérielles de données, ce qui permet de sélectionner l'information venant de la bobine émettrice L3 du support d'information, de l'alimentation de l'étage de puissance (11), modulée et appliquée à la bobine émettrice (L1).

6. Le système de transmission de structures sérielles de données pour systèmes d'identification de supports d'information à base électromagnétique comprenant un sous-ensemble d'interface (11;12;15;16;17;) pour la réception, le traitement et la transmission de données d'une source, un support d'information intégré (1;2;3;4;5;6;7;8;9) avec modulateur de phase ou de fréquence (4) et des circuits d'oscillation pour la transmission de données, dans l'interface étant prévu un modulateur de phase ou de fréquence (12) pour assurer la modulation des données d'origine, est caractérisé en ce qu'un excitateur de puissance (11) est monté en aval du modulateur, qui est en contact avec un circuit de modulation qui est relié de son côté par un amplificateur sélectif (17) à un démodulateur (15) et par un comparateur numérique (13) à un microprocesseur ou un microcontrôleur ou une logique librement programmable (16), que ledit circuit oscillant (un couplage électromagnétique (L1) est couplé à un circuit oscillant (L2, L3) d'un support d'information qui, outre les éléments usuels tels qu'un redresseur d'entrée (2), un modulateur d'impulsion et un modulateur de synchronisation, comprend encore un modulateur de fréquence ou de phase (4) et un modulateur d'amplitude (3), qui sont tous liés entre eux, à une fréquence de synchronisation programmable, moyennant une bascule (10), directement ou en alternance, et à l'aide d'une logique de commande (7) qui en plus de cela est également relié à un compteur de programme (8) et à une mémoire (9), et que la sortie du démodulateur de fréquence ou de phase (4) peut être connectée à l'entrée du modulateur d'amplitude (3) pour permettre de renvoyer en même temps les données transmises, que le comparateur numérique (13) du module d'interface est prévu pour assurer, la comparaison bit par bit, les bits envoyés avec ceux renvoyés simultanément, par le support d'information.

7. Support d'information pour un système d'identification à base inductive, comprenant un circuit oscillant récepteur doté d'une bobine (L2), d'un comparateur (1), d'un démodulateur de phase ou de fréquence (4), des moyens destinés au redressement (2) et à la stabilisation (5) de la tension, d'une logique de commande (7) et d'un compteur de programme (8), est caractérisé en ce qu'un multiplexeur numérique (10) qui est lié au démodulateur (4) dont la sortie peut être connectée à l'entrée du modulateur d'amplitude (3) pour permettre la retransmission simultanées des données reçues, liée à la logique de commande (7) et à une mémoire non volatile (9) et permet depuis le modulateur d'amplitude (3) de moduler depuis une bobine émettrice (L3) le champ d'une bobine émettrice (L1) d'un interface, est prévu.

8. Le support d'information selon la revendication 7 est caractérisé en ce que la bobine émettrice (L3) du support d'information est dimensionnée de sorte qu'à la bobine émettrice (L3) la tension induite par la bobine émettrice (L1) soit si faible qu'une bascule intégrée puisse l'atténuer et qu'à la bobine réceptrice (L2) du support d'information l'atténuation ainsi obtenue de la tension induite par la bobine émettrice (L1) soit inférieure à 20%.

9. Le support d'information selon la revendication 8 est caractérisé en ce que les bobines (L2, L3) sont essentiellement disposées de façon coaxiale et au même niveau et que les axes des bobines sont essentiellement parallèles à l'axe de la bobine émettrice (L1).
